# EUROPÄISCHE PATENTSCHRIFT

(11) **EP 2 119 078 B1**
(45) Veröffentlichungstag und Bekanntmachung des Hinweises auf die Patenterteilung: **28.11.2018**
(21) Anmeldenummer: 08707156.9
(22) Anmeldetag: 21.01.2008
(51) Int. Cl.: H04L 1/00, G08C 25/04, H04L 29/14, H04L 1/22, G10L 19/00

(54) **VORRICHTUNG UND VERFAHREN ZUM ERZEUGEN EINES ZU SENDENDEN SIGNALS ODER EINES DECODIERTEN SIGNALS**
DEVICE AND METHOD FOR GENERATING A SIGNAL FOR TRANSMISSION OR A DECODED SIGNAL
DISPOSITIF ET PROCÉDÉ PERMETTANT DE PRODUIRE UN SIGNAL À ÉMETTRE OU UN SIGNAL DÉCODÉ

(30) Priorität: 22.01.2007 DE 102007003187
(43) Veröffentlichungstag der Anmeldung: 18.11.2009
(73) Patentinhaber: Fraunhofer-Gesellschaft zur Förderung der angewandten Forschung e.V., 80686 München (DE)
(72) Erfinder: SCHULLER, Gerald, 99089 Erfurt (DE); WABNIK, Stefan, 26127 Oldenburg (DE); GRILL, Bernhard, 91207 Lauf (DE); ZINK, Alexander, 96135 Stegaurach (DE)
(74) Vertreter: Zinkler, Franz
(86) Internationale Anmeldenummer: PCT/EP2008/000423
(87) Internationale Veröffentlichungsnummer: WO 2008/089938

(56) Entgegenhaltungen:
- EP-A- 0 592 151
- EP-A- 1 211 837
- EP-A2- 1 072 112
- EP-A2- 1 072 112
- WO-A-02/41301
- WO-A-03/009578
- WO-A-03/009590
- WO-A-03/046891
- WO-A-2004/066706
- DE-A1- 19 914 742
- US-A- 4 891 806
- US-A- 4 891 806
- US-A1- 2004 240 415
- US-A1- 2006 013 168
- US-A1- 2006 188 004
- US-A1- 2006 188 004
- US-A1- 2006 206 319
- US-A1- 2006 285 607
- "Digital Radio Mondiale (DRM); System Specification European B roadcasting U nion U nion E uropéenne de R adio-Télévision EB UÜER; ETSI ES 201 980" ETSI STANDARDS, LIS, SOPHIA ANTIPOLIS CEDEX, FRANCE, Bd. BC, Nr. V2.2.1, 1. Oktober 2005 (2005-10-01), XP014032187 ISSN: 0000-0001
- HERRE J ET AL: "Overview of MPEG-4 audio and its applications in mobile communications" COMMUNICATION TECHNOLOGY PROCEEDINGS, 2000. WCC - ICCT 2000. INTERNATI ONAL CONFERENCE ON BEIJING, CHINA 21-25 AUG. 2000, PISCATAWAY, NJ, USA,IEEE, US, Bd. 1, 21. August 2000 (2000-08-21), Seiten 604-613, XP010526820 ISBN: 978-0-7803-6394-6
- SEITZER D ET AL: "Digital coding of high quality audio" COMPEURO '91. ADVANCED COMPUTER TECHNOLOGY, RELIABLE SYSTEMS AND APPLI CATIONS. 5TH ANNUAL EUROPEAN COMPUTER CONFERENCE. PROCEEDINGS. BOLOGNA, ITALY 13-16 MAY 1991, LOS ALAMITOS, CA, USA,IEEE COMPUT. SOC, US, 13. Mai 1991 (1991-05-13), Seiten 148-154, XP010022850 ISBN: 978-0-8186-2141-3

## Beschreibung

Die vorliegende Erfindung bezieht sich auf für Rundfunksysteme einsetzbare Informationscodierer und insbesondere auf Informationscodierer, die in digitalen Rundfunksystemen eingesetzt werden können.

Der digitale Audio-Rundfunk entwickelt sich zunehmend. Seit einiger Zeit existiert DAB (Digital Audio Broadcast) für UKW-Frequenzen, und seit kurzem existiert auch DRM (Digital Radio Mondial) für die Lang-, Mittel- oder Kurzwelle.

Solche Rundfunksysteme zeigen sich dadurch aus, dass eine gewisse Anzahl von Daten gepuffert werden muss, bevor der Rundfunkempfänger mit der Datenausgabe anfangen kann. Wenn der Rundfunkhörer seinen Rundfunkempfänger einschaltet, so ist das wenig problematisch, da der Rundfunkempfänger einfach etwas später mit der Wiedergabe beginnt, wobei dieser Abstand von dem Rundfunkhörer als nicht besonders störend wahrgenommen wird. Wenn der Rundfunkhörer allerdings das Programm wechselt, so ist der Hörer von früheren Systemen gewohnt, dass dann sofort Daten ausgegeben werden. Bei einem digitalen Rundfunkempfänger ist dies jedoch nicht möglich, da von dem anderen Programm zunächst wieder eine bestimmte Menge von Daten gespeichert werden muss, bevor eine Wiedergabe dieses anderen Programms begonnen werden kann. Diese Verzögerung wird der Benutzer als störend empfinden, da sie nicht zu Anfang des Radiohörens, sondern während des Radiohörens auftritt.

Das US-Patent Nr. 6,842,724 B1 offenbart ein Verfahren und eine Vorrichtung zur Reduzierung einer Anfangs-Verzögerung in Datenpaket-basierten Streaming-Anwendungen oder in einem Telekommunikationsnetz, wie beispielsweise einem Lokal-Exchange-Carriernetz oder einem Inter-Exchange-Carriernetz oder einem lokalen oder globalen Computernetz. Eine Programmquelle, beispielsweise ein Audio- und/oder Video-Datenstrom wird codiert und als zwei oder mehr separate Bitströme, beispielsweise Sequenzen von Datenpaketen, übertragen. Die Übertragung von einem dieser Bitströme ist um eine gegebene Verzögerung bezüglich der Übertragung des anderen Bitstroms verzögert. Am Empfangsende des Übertragungskanals werden die zwei oder mehr Bitströme durch Empfängerpuffer mit unterschiedlichen Größen gepuffert, woraus unterschiedliche Zeitverzögerungen resultieren, wenn der Inhalt der Puffer decodiert wird. Insbesondere entspricht die Zeitverzögerungsdifferenz (invers) den relativen Verzögerungszeiten vor der Übertragung. Zum Codieren wird entweder ein mehrfach beschreibendes Quellencodierschema oder ein eingebettetes Codierschema verwendet, bei denen zumindest einer der einzelnen Bitströme ausreichend ist, um ein zufriedenstellendes decodiertes Signal zu erzeugen, wobei die Hinzufügung des anderen Bitstroms die Qualität des decodierten Signals verbessern wird. Alternativ können die Datenströme mehrfache codierte Darstellungen der Programmquelle mit unterschiedlichen Bitraten sein, wobei codierte Darstellungen mit niedrigerer Bitrate mit entsprechend größeren Verzögerungen übertragen werden.

Im Gegensatz zu den in dem vorstehenden Dokument beschriebenen Übertragungsarten, bei denen lediglich die Verzögerung eines Datenpakets berücksichtigt werden muss, kommen bei digitalen Rundfunksystemen weitere Herausforderungen zu tragen, die sich aus der Tatsache ergeben, dass der Übertragungskanal kein leitungsgebundener Kanal, sondern ein drahtloser (wireless) Übertragungskanal ist. Ein Sender hat somit eine Sendeantenne, die Funkwellen ausstrahlt, die von einem Empfänger, der eine Empfangsantenne aufweist, empfangen und verarbeitet werden können. Aufgrund der Tatsache, dass der Übertragungskanal variiert, was systembedingt sein kann, und was jedoch auch daraus entstehen kann, dass sich der Sender aber noch mehr der Empfänger bewegt, kann ein Übertragungskanal besser oder schlechter und insbesondere so schlecht werden, dass eine Verbindung vom Empfänger zum Sender abrupt abreißt. Insbesondere wird, wie es bei digitalen Übertragungen generell der Fall ist, die Verbindung unterhalb einer vom System gegebenen SNR einfach abreißen und es gibt keine sog. "graceful degradation", also eine nach und nach standfindende Abnahme der Übertragungsqualität, wie sie beim analogen Rundfunk in angenehmer Weise in Erscheinung tritt. Das Abreißen der Verbindung unterhalb eines vom System gegebenen SNR (SNR = signal noise ratio = Signal/Rausch-Verhältnis) ist besonders bei DRM problematisch, da DRM Kurzwellenträger verwenden, die ein langsam veränderliches SNR haben, was in wiederkehrenden Ausfällen resultiert.

Bei DAB ist diese Schwelle der Empfangsqualität bzw. das SNR, bei dem die Verbindung abreißt, problematisch, da die Ausrichtung der Antenne oder das Finden einer guten Empfangsposition schwieriger wird als im analogen Rundfunk und insbesondere dann noch komplexer wird, wenn sich der Empfänger bewegt. Im Dokument: HERRE J ET AL: "Overview of MPEG-4 audio and its applications in mobile communications",COMMUNICATION TECHNOLOGY PROCEEDINGS, 2000. WCC - ICCT 2000. INTERNATIONAL CONFERENCE ON BEIJING, CHINA 21-25 AUG. 2000, PISCATAWAY, NJ, USA,IEEE, US, Bd. 1, 21. August 2000 (2000-08-21), Seiten 604-613, XP010526820,ISBN: 978-0-7803-6394-6, wird ein MPEG-4 Sende-Empfangssystem beschrieben das Haupt- und Neben-Kanäle umfasst.

Die Aufgabe der vorliegenden Erfindung besteht darin, ein Konzept zur digitalen Übertragung von Daten zu schaffen, bei dem die Anzahl der Verbindungsausfälle reduziert oder eliminiert ist.

Diese Aufgabe wird durch eine Vorrichtung zum Erzeugen eines zu sendendes Signals gemäß Anspruch 1, eine Vorrichtung zum Erzeugen eines decodierten Signals gemäß Anspruch 17, ein Verfahren zum Erzeugen eines zu sendenden Signals gemäß Patentanspruch 24, ein Verfahren zum Erzeugen eines decodierten Signals gemäß Anspruch 25, ein Computer-Programm gemäß Patentanspruch 26 gelöst.

Der vorliegenden Erfindung liegt die Erkenntnis zugrunde, dass eine Reduktion der unangenehmen Datenausfälle erreicht werden kann, wenn von dem einkanaligen Gedanken weggegangen wird, bei dem das Programmmaterial codiert und übertragen wird. Erfindungsgemäß wird zusätzlich zu dem typischerweise übertragenen Programmmaterial, das den Hauptkanal darstellt, ein Nebenkanal erzeugt und übertragen, wobei der Hauptkanal und der Nebenkanal separat voneinander decodierbar sind und beide das Informationssignal darstellen. Allerdings werden der Hauptkanal und der Nebenkanal so erzeugt, dass der Nebenkanal gegen Übertragungskanaleinflüsse robuster ist, als der Hauptkanal. Wenn also eine Situation entsteht, bei der das SNR des Systems kleiner als das benötigte SNR für den Hauptkanal wird, wenn also der Übertragungskanal so ist, dass die Robustheit des Hauptkanals nicht mehr ausreichend ist, wird erfindungsgemäß auf den Nebenkanal umgeschaltet, der robuster gegenüber Übertragungskanaleinflüssen ist und somit noch decodiert werden kann, während der Hauptkanal nicht mehr decodiert werden kann. Die Verbindung vom Empfänger zum Sender wird daher nicht einfach abreißen, sondern die Wiedergabe wird mit den Daten des Nebenkanals, die robust gegen Übertragungskanaleinflüsse sind, fortgesetzt, obgleich natürlich kein Hauptkanal mehr wiedergegeben wird. Da jedoch Hauptkanal und Nebenkanal dieselben Informationen darstellen, wird dem Rundfunkhörer bzw. dem Rundfunkbetrachter nach wie vor eine Information geliefert.

Allerdings wird es bei bevorzugten Ausführungsbeispielen der vorliegenden Erfindung so sein, dass der Nebenkanal eine wesentlich stärker komprimierte Darstellung der Informationen ist als der Hauptkanal. Insbesondere im Kontext einer verlustbehafteten Datenkompression wird somit die Wiedergabequalität bei der Wiedergabe des Nebenkanals schlechter sein als die Wiedergabequalität, wenn der Hauptkanal wiedergegeben werden kann. Dies ist jedoch aus Sicht des Rundfunkteilnehmers nicht so problematisch, da jeder Rundfunkteilnehmer lieber eine Wiedergabe mit reduzierter Qualität als gar keine Wiedergabe mehr hat.

Dieses Ausführungsbeispiel ist insbesondere dahingehend vorteilhaft, dass die Gesamtdatenrate zur Übertragung des Hauptkanals und des Nebenkanals nicht erheblich höher ist als wenn nur der Hauptkanal übertragen wird, da zur Codierung eines stark verlustbehafteten komprimierten Datensignals inhärent weniger Bits benötigt werden als zum Codieren eines höherqualitativen Datensignals. Insbesondere wird es bevorzugt, dass die für den Nebenkanal benötigten Bits höchstens halb so viele sind wie die für den Hauptkanal benötigten Bits und insbesondere sogar weniger als ein Zehntel der für den Hauptkanal benötigten Bits sind.

Einem weiteren bevorzugten Ausführungsbeispiel werden der Hauptkanal und der Nebenkanal nicht synchron zueinander übertragen, sondern mit einer zeitlichen Verschiebung, so dass der Hauptkanal gegenüber dem Nebenkanal verzögert ist. Auf Empfängerseite wird der Nebenkanal, der - bezogen auf einen bestimmten Zeitpunkt der ursprünglichen Informationsdaten - früher beim Empfänger ankommt, in dem Empfänger gepuffert, während keine oder nur eine geringere Pufferung des Hauptkanals nötig ist. Dies bedeutet, dass dann, wenn die Übertragungskanalsituation günstig ist, der Hauptkanal ohne Verzögerung übertragen werden kann und auch ein Umschalten vom Hauptkanal zu einem anderen Hauptkanal ohne Probleme möglich ist. Eine Umschaltverzögerung würde erst dann merkbar auftreten, wenn genau zum Zeitpunkt des Umschaltens eine Übertragungskanalverschlechterung stattfinden würde, die zur Folge haben würde, dass auf den Nebenkanal zurückgegriffen werden muss.

Die Verzögerung des Hauptkanals gegenüber dem Nebenkanal ist ferner dahingehend vorteilhaft, dass dann, wenn ein Übertragungsausfall stattfindet, der sogar so groß ist, dass nicht einmal der Nebenkanal mit ausreichender Qualität empfangen worden ist, wenigstens für die Zeitdauer der Nebenkanal wiedergegeben kann, für die der Nebenkanal gespeichert worden ist. Bei bevorzugten Ausführungsbeispielen wird eine Speicherzeit von mehr als 10 Sekunden und insbesondere von sogar mehr als 20 Sekunden, vorzugsweise mehr als 30 Sekunden gewählt, die zwar zu einem gewissen Speicherbedarf führt, die jedoch im Hinblick auf die günstige Verfügbarkeit großer Speicher unkritisch ist. Der entscheidende Vorteil besteht jedoch darin, dass der Rundfunkempfänger 30 Sekunden allein aus seinem Speicher - zwar nieder-qualitativ - abspielen kann, ohne dass er gültige Signale empfängt. Dass der Nebenkanal weniger Bits als der Hauptkanal benötigt, entspannt zugleich den benötigen Speicherbedarf im Empfänger, was jedoch von einem Benutzer gerne akzeptiert wird, da der Empfang des Nebenkanals ohnehin eine Notsituation ist, die nicht der normalen Situation entspricht, jedoch insbesondere dann, wenn der Nebenkanal eine Sprachverständlichkeit sicherstellt, für einen Benutzer besonders angenehm ist, wenn ein Benutzer eine interessante Radiosendung hört, bei der es besonders auf das gesprochene Wort ankommt, dessen Verständlichkeit durch den Nebenkanal garantiert wird.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein Blockschaltbild eines Ausführungsbeispiels für eine Vorrichtung zum Erzeugen eines zu sendenden Signals;
- Fig. 2: verschiedene Ausführungsformen des Codierers von Fig. 1;
- Fig. 3: eine alternative Ausführung des Codierers von Fig. 1;
- Fig. 4: eine spezielle Ausführung des Source-Codierers von Fig. 2;

- Fig. 5: eine Vorrichtung zum Erzeugen eines decodierten Signals; und
- Fig. 6: eine speziellere Ausführungsform der Vorrichtung von Fig. 5;
- Fig. 7: ein Flussdiagramm der Schritte, die auf Seiten des Rundfunkteilnehmers z. B. in einem digitalen Empfänger vorgenommen werden.

Erfindungsgemäß wird eine so genannte "Graceful Degradation" erreicht, also eine Rundfunkwiedergabe von Audio- und/oder Videodaten unterhalb der für den Hauptkanal benötigten Schwelle. So beinhaltet der Nebenkanal z. B. die Daten eines Low-Bitrate-Coders mit demselben Inhalt wie der Hauptkanal. Zweck ist es, bei Ausfällen ein Ersatzsignal zu erzeugen, was z. B. aufbauend auf der Technik des Erzeugens von Comfort-Noise bei Sprachcodierern implementiert werden kann, und zwar unter Verwendung der Daten, die im Nebenkanal übertragen werden. Diese Daten werden bei der empfängerseitigen Signalsynthese eingesetzt, um die Signalsynthese nicht bei einer alleinigen Rauscherzeugung zu belassen, sondern um die Signalsynthese wenigstens so detailliert zu steuern, dass eine Sprachverständlichkeit beispielsweise hergestellt wird, um z. B. Nachrichten weiterhin verstehen zu können.

Ferner wird bei einem Ausführungsbeispiel eine zeitliche Verschiebung zwischen dem Hauptkanal und dem Nebenkanal durchgeführt, so dass der Hauptkanal gegenüber dem Nebenkanal verzögert ist. Ferner wird erfindungsgemäß für den Nebenkanal eine robustere Modulation als für den Hauptkanal mit den Haupt-Audiodaten durchgeführt.

Ein Modus bei der DRM-Technik für den Hauptkanal, der dort auch als Media-Service Channel (MSC) bezeichnet wird, hat eine Bitrate von beispielsweise 14,5 kb/s. In dem Nebenkanal werden bei diesem Ausführungsbeispiel Zusatzdaten mit 1 kb/s im SDC (Service Description Channel) robuster übertragen und z. B. mit einem Vorlauf von 30 Sekunden codiert. Der Hauptkanal ist also um 30 Sekunden gegenüber dem Zusatzkanal verzögert. Bei Abriss der Verbindung bis 30 Sekunden wird der Nebenkanal wiedergegeben. Bei einer Reduktion den SNR unter die Schwelle des MSC, aber oberhalb der Schwelle des SDC wird ebenso der Nebenkanal wiedergegeben. Die Erfindung ist somit in einem Übertragungssystem für die digitale Medienübertragung einsetzbar, bei dem der Hauptkanal vorhanden ist, der die Haupt-Mediendaten aufweist, und bei dem ferner der Nebenkanal vorhanden ist, in dem die gleichen Mediendaten mit einer höheren Kompression und einer geringeren Bitrate dargestellt sind, wobei der Nebenkanal eine robustere Modulation hat als der Hauptkanal hat, was ein geringeres minimales SNR für die Übertragung und die Codierung des Nebenkanals im Vergleich zum Hauptkanal erfordert. Je nach Implementierung kann der Hauptkanal gegenüber dem Nebenkanal auch zeitlich verzögert sein.

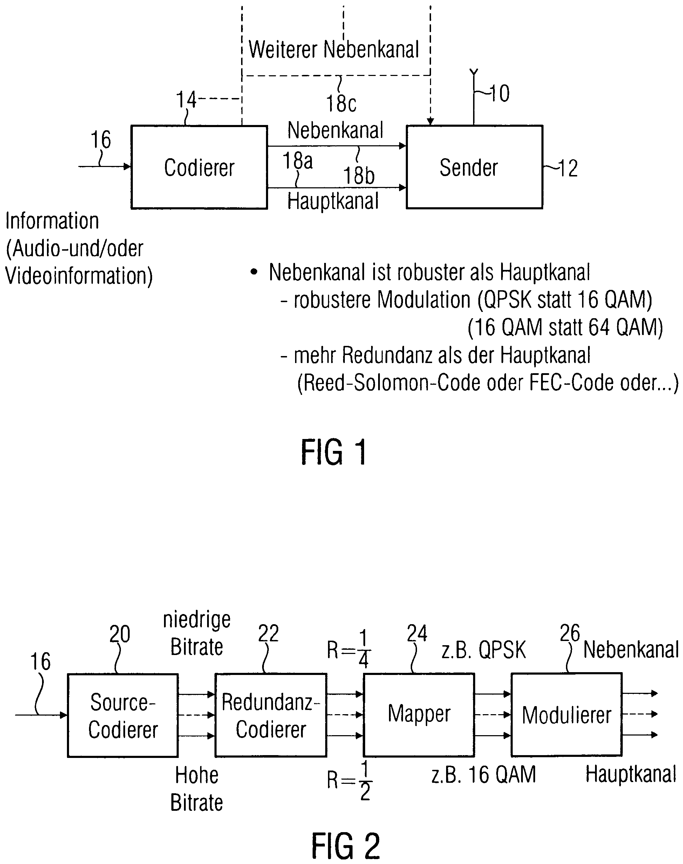

Nachfolgend wird auf die Fig. 1 bis 7 detaillierter eingegangen. Fig. 1 zeigt eine Vorrichtung zum Erzeugen eines zu sendenden Signals, das letztendlich von einer Sendeantenne 10 ausgegeben wird, die von einem Sender 12 ihr Sendesignal erhält. Dem Sender 12 vorgeschaltet ist ein Codierer 14, welcher als Eingangsdaten Informationen 16 erhält, die Audio- und/oder Videoinformationen umfassen, und welcher ein Ausgangssignal zu dem Sender 12 liefert, das sowohl Hauptkanaldaten 18a als auch Nebenkanaldaten 18b umfasst. Je nach Implementierung des Codierers 14 und des Senders 12 werden die Daten 18a, 18b zwischen dem Codierer 14 und dem Sender 12 in zwei getrennten Datenströmen übertragen, oder werden die Daten gemultiplext oder bereits nach einer Trägermodulation in einem Datenstrom zum Sender übertragen, der dann nur noch die Aufgabe hat, wie sie von einem typischen HF-Front-End durchgeführt wird, nämlich das Basisdatensignal auf einen HF-Träger zu mischen und zu verstärken. Insbesondere ist der Codierer ausgebildet, um den Hauptkanal 18a und den Nebenkanal 18b zu erzeugen, die separat voneinander decodierbar sind und so beide das Informationssignal darstellen.

Um eine decodierte Version der Informationen zu erhalten, reicht erfindungsgemäß entweder der Nebenkanal oder der Hauptkanal. Anders ausgedrückt, reichen die Daten des Nebenkanals alleine ohne die Daten des Hauptkanals aus, um wenigstens eine geringer qualitative Darstellung der Informationen auf der Codiererseite zu liefern.

Erfindungsgemäß ist der Codierer 14 ferner ausgebildet, um den Hauptkanal 18a und den Nebenkanal 18b so zu erzeugen, dass der Nebenkanal gegen Übertragungskanaleinflüsse robuster ist als der Hauptkanal. Diese Robustheit kann auf verschiedene Arten und Weisen erzeugt werden, beispielsweise durch eine Verwendung einer robusteren Modulation für die Nebenkanaldaten oder durch die Einbringung einer höheren Redundanz in die Nebenkanaldaten als in die Hauptkanaldaten.

Fig. 2 zeigt eine detaillierte Darstellung des Codierers 14 gemäß diversen Ausführungsbeispielen der vorliegenden Erfindung, die alle in Fig. 2 optional gezeichnet sind. Der Codierer 14 kann einen Source-Codierer oder Quellencodierer 20, einen Redundanz-Codierer 22, einen Mapper 24 und/oder einen Modulierer 26 umfassen. In den Source-Codierer 20 werden die Informationen 16 eingespeist. Je nach Implementierung liefert bereits der Source-Codierer 20 den Nebenkanal 18b und den Hauptkanal 18a, wie es durch die durchgezogenen Linien zwischen Sourcecodierer 20 und Redundanzcodierer 22 dargestellt ist. Alternativ kann jedoch der Sourcecodierer so ausgebildet sein, dass er nur eine einzige Version liefert, die dann, wie es durch die gestrichelte Linie zwischen dem Block 20 und dem Block 22 dargestellt, in den Redundanz-Codierer 22 eingespeist wird, welcher dann, beispielsweise durch unterschiedliche Redundanzcodierung, die sich durch unterschiedliche Coderaten wiederspiegelt, ausgangsseitig den Nebenkanal 18b und den Hauptkanal 18a erzeugt, wie es durch die durchgezogenen Linien zwischen dem Block 22 und dem Block 24 dargestellt ist. Alternativ könnte der Redundanz-Codierer jedoch ebenfalls ausgebildet sein, um ausgangsseitig nur einen einzigen Redundanzcodierten Datenstrom zu erzeugen, welcher, wie es durch die gestrichelte Linie zwischen Block 22 und Block 24 dargestellt ist, in den Mapper 24 eingespeist wird, der dann unter Verwendung unterschiedlicher Mapping-Regeln den Hauptkanal 18a und den Nebenkanal 18b erzeugt.

Alternativ kann der Mapper 24 auch einen einzigen Ausgangsdatenstrom erzeugen und diesen dem Modulierer 26 zuführen, der z.B. ein FDMA, TDMA oder CDMA-Modulationsverfahren durchführt, also eines der bekannten Frequenzmultiplex-, Zeitmultiplex- oder Codemultiplex-Verfahren oder eine Kombination dieser Verfahren, wie es in der Technik bekannt ist. Je nach Implementierung kann der Modulierer ausgangsseitig ein einziges Signal liefern, das dann sowohl Hauptkanal als auch Nebenkanal bereits in einem einzigen Datenstrom umfassen würde, oder der Modulierer kann den Nebenkanal und den Hauptkanal als getrennte Datenströme liefern, welche dann im Sender 12 miteinander kombiniert werden, bevor dann ein einziges Antennensignal ausgestrahlt wird, das jedoch beide Kanäle umfasst.

Prinzipiell ist es ausreichend, dass in einem der Blöcke 20, 22, 24, 26 unterschiedliche Kanäle mit unterschiedlichen Robustheiten erzeugt werden. Es können jedoch auch verschiedene unterschiedliche Robustheiten kumuliert werden. So kann beispielsweise der von dem Redundanz-Codierer 22 erzeugte Nebenkanal, der per se schon Fehler-resistenter aufgrund der größeren Redundanz ist, zusätzlich im Mapper einer Mapping-Regel unterzogen werden, die robuster als eine andere Mapping-Regel ist, mit der der Hauptkanal beaufschlagt werden kann, wobei zusätzlich noch im Modulierer für den Nebenkanal ein fehlerresistenteres Modulationsverfahren eingesetzt werden kann, als für den Hauptkanal.

Erfindungsgemäß wird es allerdings bevorzugt, dass der Source-Codierer 20 bereits zwei unterschiedliche Ausgangsdatenströme erzeugt, wobei der Nebenkanal eine niedrige Bitrate hat und der Hauptkanal eine hohe Bitrate hat, welche dann durch eine Kombination der Blöcke 22, 24, 26 bearbeitet werden können, oder welche z. B. nur durch den Redundanzcodierer 22 eine unterschiedliche Robustheit bekommen, wobei der Redundanzcodierer dann ausgangsseitig bereits beide Datenströme nach einer bestimmten Vorschrift vereinigt, so dass in den Mapper 24 nur noch ein Datenstrom eintritt und ein Datenstrom austritt. Alternativ könnte jedoch der Redundanzcodierer einfach beide eingangsseitigen Datenströme mit derselben Coderate verarbeiten, wobei dann der Mapper oder der Modulierer die unterschiedlichere Robustheit der beiden Datenkanäle erzeugen würde.

Unterschiedliche Robustheiten im Redundanz-Codierer können erfindungsgemäß erreicht werden, indem z. B. ein Reed-Solomon-Code oder ein FEC-Code z. B. mit rückgekoppelten Schieberegistern eingesetzt wird, welcher ein bestimmtes Generator-Polynom hat und mit oder ohne Puncturing arbeitet. Die Coderate beschreibt die Anzahl der Ausgangsbits für eine bestimmte Anzahl von Eingangsbits und ist aufgrund der Redundanz-Hinzufügung immer kleiner als 1. Für den Nebenkanal kann eine Coderate kleiner als 0,5 verwendet werden, während für den Hauptkanal eine Coderate größer oder gleich 0,5 eingesetzt werden kann.

Bezüglich des Mappers 24 können für den Hauptkanal und den Nebenkanal unterschiedliche Mapping-Regeln eingesetzt werden. Eine Mapping-Regel hat eine bestimmte Anzahl von Symbolen in der komplexen Ebene, wobei für ein QPSK-Mapping lediglich vier Symbole in der komplexen Ebene existieren, während für ein 16-QAM-Mapping beispielsweise 16 Symbole in der komplexen Ebene existieren. Dies bedeutet, dass ein Decodierer bei QPSK lediglich zwischen vier unterschiedlichen Symbolen unterscheiden muss, während ein Decodierer bei 16-QAM bereits zwischen 16 verschiedenen Symbolen unterscheiden muss. Das minimale SNR für ein QPSK-Mapping ist somit deutlich niedriger als das minimale SNR für ein 16-QAM-Mapping. Allerdings werden pro Modulationssymbol bei einem 16-QAM-Mapping vier Datenbits übertragen, während bei OPSK pro Symbol lediglich zwei Datenbits übertragen werden. Auf die Robustheit gegenüber Übertragungskanaleinflüssen hat das Mapping einen hohen Einfluss.

Alternative Modulationsverfahren können ebenfalls eingesetzt werden, wie beispielsweise DPSK oder 8-QAM. Auch hierarchische Modulationsverfahren, bei denen einer QPSK z. B. eine 16-QAM überlagert ist, können für die verschiedenen Kanäle implementiert werden. So kann auch für den Hauptkanal 64 QAM eingesetzt werden und für den Nebenkanal kann 16 QAM eingesetzt werden.

Auch im Modulierer 26 können unterschiedliche Robustheiten erzeugt werden, wenn z. B. für eine CDMA-Modulation unterschiedlich lange Codesequenzen eingesetzt werden für den Nebenkanal bzw. für den Hauptkanal, oder wenn bei einer FDMA-Modulation für die unterschiedlichen Kanäle unterschiedliche Frequenzbandbreiten eingesetzt werden, oder bei einer CDMA-Modulation unterschiedlich lange Time-Slots eingesetzt werden.

Nachfolgend wird auf bevorzugte Implementierungen des Source-Codierers 20 von Fig. 2 eingegangen. Je nach Implementierung kann der Source-Codierer von Fig. 2 einen AudioCodierer 30 und einen parallel geschalteten Sprachcodierer 32 umfassen. Eine Verzögerung ist zwischen den Audiocodierer 30 und einen Kombinierer, wie beispielsweise einen Multiplexer 34 geschaltet, wobei die Verzögerungseinrichtung mit 36 bezeichnet ist. Sie kann z. B. als FIFO-Speicher ausgebildet sein, der so dimensioniert ist, dass mehr als 10 Sekunden, vorzugsweise mehr als 20 Sekunden und insbesondere mehr als 30 Sekunden Daten gespeichert werden. Die Verzögerungseinrichtung 36 speist also den MSC-Eingang des Kombinierers 34, während der Sprachcodierer 32 bei dieser Implementierung den SDC-Eingang des Kombinierers speist. Selbstverständlich können auch zusätzliche Verzögerungen sowohl im Hauptkanal als auch im Nebenkanal 18a, 18b vorhanden sein, solange die Verzögerungen im Hauptkanal größer als die Verzögerungen im Nebenkanal sind. Insbesondere beträgt die Datenrate im MSC, der der Media-Service-Channel ist, 14,5 kb/s, während die Datenrate im Nebenkanal, der der SDC bzw. Service Description Channel ist, bei 1 kb/s liegt.

Andere Datenraten sind ebenfalls möglich, wobei insbesondere Verhältnisse zwischen MSC und SDC bzw. zwischen Hauptkanal und Nebenkanal von < 2, insbesondere < 5 und spezieller < 10 bevorzugt werden.

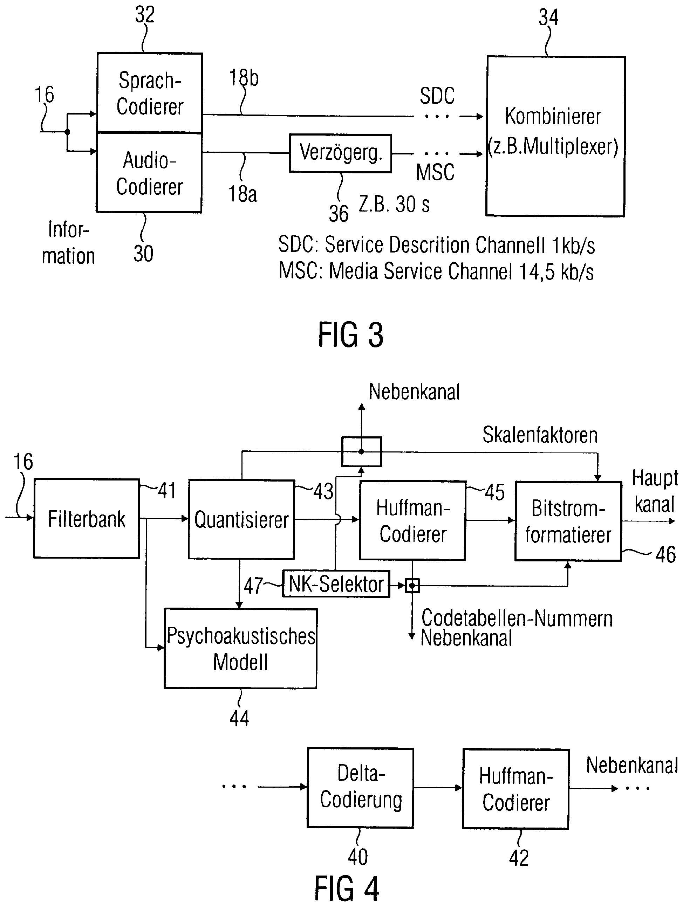

Bei dem in Fig. 3 gezeigten Ausführungsbeispiel ist somit der Codierer 30, der den Hauptkanal 18a erzeugt, ein Audiocodierer und separat vom Codierer 32 ausgebildet, der den Nebenkanal 18b erzeugt und lediglich als Sprachcodierer ausgebildet ist. Der Sprach-Codierer 32 kann komplette Sprach-Codierer-Rahmen liefern. Er kann jedoch alternativ auch lediglich Koeffizienten als Nebenkanal ausgeben, die zur Beschreibung der spektralen Einhüllenden (spectral envelope) dienen. Insbesondere wird der Sprachcodierer 32 so ausgebildet sein, dass die Koeffizienten zur Beschreibung der spektralen Einhüllenden so fein quantisiert und so oft übertragen werden, dass auf Empfängerseite unter Verwendung dieser Information eine Sprachverständlichkeit erreicht wird. Wenn der Sprach-Codierer als LPC-Codierer ausgeführt ist, wird es bevorzugt, die LPC-Koeffizienten, die vom Sprachcodierer berechnet worden sind, zu übertragen oder wird es bevorzugt, Koeffizienten zu übertragen, die aus den LPC-Koeffizienten (LPC = linear predictive coding) abgeleitet sind. Koeffizienten, die aus LPC-Koeffizienten abgeleitet sind, sind beispielsweise quantisierte oder differenz-codierte (Delta-codierte) Koeffizienten, wie es bei 40 und 42 in Fig. 4 angedeutet ist.

Alternativ kann der Source-Codierer 20 von Fig. 4 auch so ausgebildet sein, wie es in Fig. 4 gezeigt. Ein solcher Codierer wird beispielsweise gemäß MPEG-4 oder MPEG-1, Layer III (MP3) verwendet. Durch eine Filterbank 41 wird das Informationssignal 16 in eine spektrale Darstellung überführt, die einem Quantisierer 43 zugeführt wird. Die Filterbank 41 kann hierbei eine Subband-Filterbank mit z. B. 16 oder 32 Filterbank-Kanälen sein, oder kann eine MDCT-Filterbank mit z. B. 512 Koeffizienten oder 1024 Koeffizienten sein, wobei auch eine Overlap-And-Add-Funktionalität für das Time-Domain-Aliasing-Cancellation (TDAC) in einem entsprechenden Decodierer einzusetzen ist.

Das von der Filterbank 41 ausgegebene Spektrum bzw. die von der Filterbank 41 ausgegebene spektrale Darstellung wird in dem Quantisierer 43 quantisiert. Der Quantisierer 43 wird von einem psychoakustischen Modell 44 gesteuert, das ausgebildet ist, um die psychoakustische Maskierungsschwelle pro Band zu berechnen, und um die Quantisierung so grob zu machen, dass das Quantisierungsrauschen unterhalb der Maskierungsschwelle liegt. Die quantisierten Spektralwerte, die vom Quantisierer 43 ausgegeben werden, werden einem Huffman-Codierer 45 zugeführt. Es sei darauf hingewiesen, dass der Quantisierer 43 nicht nur quantisierte Spektralwerte, sondern auch Skalenfaktoren ausrechnet, die die spektrale Grobstruktur der spektralen Darstellung wiedergeben. Dagegen ist die spektrale Feinstruktur in den quantisierten Spektralwerten enthalten.

Zur Huffman-Codierung verwendet der Huffman-Codierer 45 eine Vielzahl von vordefinierten Codebüchern, wobei gemäß dem MPEG-AAC-Standard zwölf verschiedene Code-Tabellen eingesetzt werden, die sich alle in dem Wertebereich der Elemente bzw. Spektralwerte oder Gruppen von Spektralwerten unterscheiden, die durch die Codetabelle codiert werden. Jede Codetabelle wird durch ihre Codetabellennummer identifiziert, welche ebenso wie die Skalenfaktoren einem Bitstromformatierer 46 zugeführt werden und auf Decodiererseite benötigt werden, um mit der richtigen Codetabelle eine Decodierung durchzuführen.

Der vom Bitstromformatierer 46 erzeugte Ausgangsdatenstrom stellt dann den Hauptkanal dar, während der Nebenkanal unter Verwendung eines Nebenkanal-Selektors 47 erzeugt wird. Der Nebenkanal-Selektor ist ausgebildet, um einen bestimmten Anteil der Daten, die in den Hauptkanal kommen, zu selektieren, um aus diesen Daten den Nebenkanal zu bestücken. Je weniger Daten selektiert werden, umso geringer wird die Datenrate im Nebenkanal, was aus Gründen eines verantwortlichen Umgangs mit der Übertragungsbandbreite erstrebenswert ist. Allerdings ist ein gewisses Mindestmaß an Daten nötig, um auf Empfängerseite nicht nur ein farbiges Rauschen zu erzeugen, sondern besser zu sein, um z. B. eine Sprachverständlichkeit herbeizuführen. Zu diesem Zweck werden die Skalenfaktoren und/oder die Codetabellen-Nummern je nach Eignung und Notwendigkeit einer Delta-Codierung 40 und einer anschließenden Huffman-Codierung 42 zugeführt. Für die Codetabellen-Nummern wird eine Delta-Codierung nicht so geeignet sein. Allerdings kann durch eine Delta-Codierung von Skalenfaktoren eine weitere Redundanzreduktion erreicht werden. Die quantisierten Spektralwerte werden im Nebenkanal nicht übertragen. Es wird also die spektrale Feinstruktur im Nebenkanal nicht übertragen. Dort befindet sich nur die spektrale Grobstruktur.

Je nach Implementierung können die Nebenkanaldaten somit von einem niederratigen Sprachcodierer oder von einem niederratigen Audiocodierer stammen. So können sogar ein Teil oder auch alle Koeffizienten des Nebenkanals aus Koeffizienten des Codierers des Hauptkanals stammen. Insbesondere dann, wenn der Hauptcodierer ein Teilband-basierter Audiocodierer ist, wird es bevorzugt, die Koeffizienten des Codierers des Hauptkanals, die die Skalenfaktoren darstellen, in den Nebenkanal zu selektieren. Je nach Implementierung kann jedoch auch als Selektionsdaten auf die Indizes für die Huffman-Codebooks zurückgegriffen werden.

Insbesondere sei darauf hingewiesen, dass, wie es auch in Fig. 1 angedeutet ist, weitere Nebenkanäle 18c eingesetzt werden können, die mit verschiedenen Zeitversätzen und/oder verschiedenen Robustheiten für die Übertragung ausgestattet sein können.

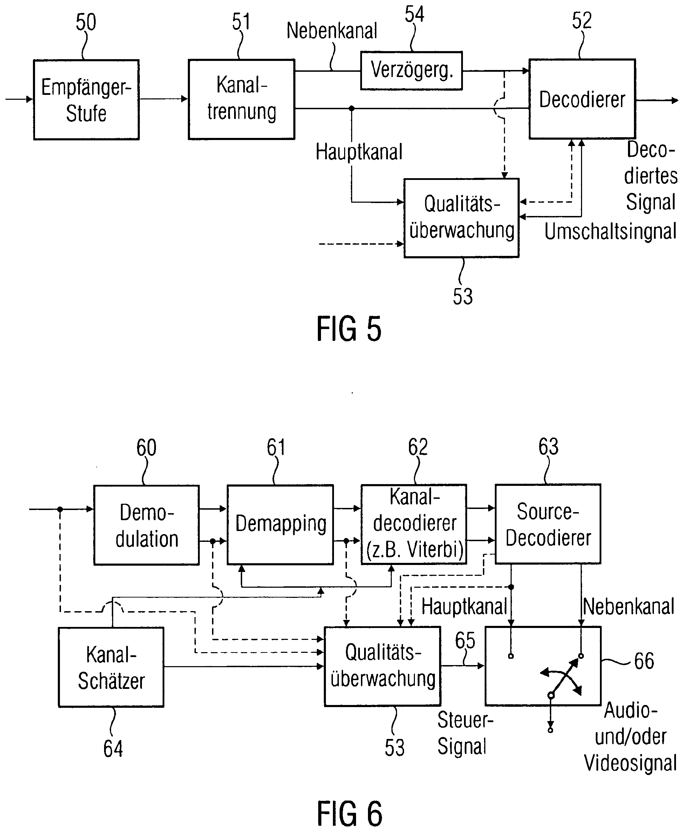

Fig. 5 zeigt eine spezielle Implementierung einer Vorrichtung zum Erzeugen eines decodierten Signals gemäß einem Ausführungsbeispiel. Die in Fig. 5 gezeigte Vorrichtung umfasst eine Empfängerstufe 50, die z. B. mit einer Empfangsantenne, die in Fig. 5 nicht gezeigt ist, gekoppelt sein kann. Dann enthält die Empfängerstufe 50 ein typisches Receiver-Front-End, mit beispielsweise einem Down-Mixer mit gekoppeltem Lokaloszillator , um das übertragene Spektrum in das Basisband bzw. in ein Zwischenfrequenz-Band herunterzumischen.

Das Empfangssignal, das von der Empfänger-Stufe 50 empfangen wird, umfasst einen Hauptkanal und einen Nebenkanal, welche separat voneinander decodierbar sind. Insbesondere ist ein minimales Signal/Rausch-Verhältnis, das zum Decodieren des Nebenkanals benötigt wird, kleiner als ein minimales Signal/Rausch-Verhältnis, das zum Decodieren des Hauptkanals nötig ist. Der Nebenkanal ist also robuster gegenüber Übertragungseigenschaften des Übertragungskanals als der Hauptkanal.

Dem Empfänger nachgeschaltet ist je nach Implementierung eine Kanaltrennstufe 51, um bereits auf HF-Seite den Nebenkanal vom Hauptkanal zu trennen. Je nach Implementierung kann diese Funktionalität jedoch auch in einem Decodierer 52 integriert sein, welcher mit dem Empfänger direkt gekoppelt ist, und welcher den Hauptkanal getrennt von dem Nebenkanal erzeugt. Das erfindungsgemäße Rundfunkteilnehmergerät, wie es in Fig. 5 gezeigt ist, umfast ferner einen Qualitätsüberwacher 53, der ausgebildet ist, um eine Empfangsqualität abzuschätzen. Hierbei kann ein Qualitätsüberwacher auf verschiedene Signale zurückgreifen, die schematisch durch die durchgezogene bzw. gestrichelte Linie in Fig. 5 angedeutet sind. Der Qualitätsüberwacher 53 kann den Hauptkanal vor dem Decodieren bzw. vor einer möglicherweise dort verwendeten Verzögerung oder nach einer dort verwendeten Verzögerung überwachen. Der Qualitätsüberwacher 53 kann jedoch alternativ oder zusätzlich auch Ausgangsdaten des Decodierers und/oder bestimmte Zwischendaten, die beim Decodieren anfallen, bzw. Decodierer-Ausgangsinformationen verwenden. Stellt der Decodierer beispielsweise bereits bei der Huffman-Decodierung fest, dass eine bestimmte Anzahl von ungültigen Codewörtern existiert, so deutet dies bereits auf eine schlechte Empfangsqualität hin, was der Qualitätsüberwachungseinrichtung 53 mitgeteilt wird.

Die Qualitätsüberwachungseinrichtung 53 ist ausgebildet, um dann, wenn eine Empfangsqualität festgestellt wird, die geringer als eine Empfangsqualitätsquelle ist, ein Umschaltsignal zu liefern, das im allgemeinsten Fall dem Decodierer 52 zugeführt wird, welcher dann von einer Wiedergabe des Hauptkanals auf eine Wiedergabe des Nebenkanals umschalten wird.

Der Umschalter, der z. B. im Decodierer 52 enthalten ist, oder auch separat ausgebildet sein kann, ist somit durch den Qualitätsüberwacher steuerbar, um als decodiertes Signal den Nebenkanal zu liefern, wenn die Empfangsqualität kleiner als eine Schwellenqualität ist, und um als decodiertes Signal den Hauptkanal zu liefern, wenn die Empfangsqualität größer oder gleich der Schwellenqualität ist.

Nachfolgend wird bezugnehmend auf Fig. 6 eine alternative Ausführungsform des erfindungsgemäßen Empfängers dargestellt. Die Funktionalität der Elemente 51, 52, 53 werden in Fig. 6 durch alternative bzw. durch zusätzliche Elemente implementiert, während die Verzögerung 54 von Fig. 5, die verwendet wird, um den Nebenkanal bezüglich des Hauptkanals zu verzögern, um also die Endcodierer-seitige Verzögerung wieder wett zu machen, in Fig. 6 nicht mehr dargestellt ist. Es sei darauf hingewiesen, dass die Verzögerung zwischen beliebigen Blöcken eingebaut werden kann, um sicherzustellen, dass dann, wenn z. B. ein Totalausfall stattfindet, wenigstens noch gemäß den in der Verzögerungseinrichtung gespeicherten Daten eine Datenausgabe allein mit den im Decodierer bereits gespeicherten Daten durchgeführt werden kann.

In Fig. 6 ist der Empfängerstufe 50 von Fig. 5 ein Demodulator 60 nachgeschaltet, der eine Demodulation des zugrundeliegenden Modulationsverfahrens, wie beispielsweise eines TDMA, FDMA oder CDMA-Verfahrens durchführen kann. Hierauf kann je nach Implementierung ein Demapper 61 nachgeschaltet werden, welcher typischerweise mit Soft-Informationen arbeiten wird, um die Modulationssymbole in Bits zurückzumappen. Die durch Soft-Informationen dargestellten Bits werden einem Kanaldecodierer 62 zugeführt, welcher beispielsweise als Viterbi-Decodierer oder als Reed-Solomon-Decodierer ausgebildet sein kann. Der Kanal-Decodierer 62 basiert darauf, dass auf Codierer-Seite durch den Redundanz-Codierer 22 Redundanz eingeführt worden ist, die zu Zwecken der verbesserten Empfangsqualität bzw. der reduzierten Bitfehlerrate auf Decodiererseite vom Kanaldecodierer ausgenutzt wird. Die Ausgangsdaten des Kanaldecodierers werden einem Source-Decodierer 63 zugeführt, welcher das Gegenstück des Encodierer-seitigen Source-Codierers sein wird, und welche insbesondere, wenn der Fig. 4-Codierer betrachtet wird, zunächst einen Bitstrom-Deformatter, einen nachgeschalteten Huffman-Decodierer, einen wiederum nachgeschalteten Re-Quantisierer und schließlich eine Synthese-Filterbank haben wird, um ein decodiertes Audiosignal zu erzeugen.

Empfängt der Source-Decodierer 63 Hauptkanal-Daten, so hat er alle zur Decodierung benötigten Daten einschließlich der spektralen Feinstruktur, und es wird eine hochqualitative Ausgabe erreicht. Wenn allerdings nur Nebenkanal-Daten übertragen werden, wie beispielsweise die spektrale Hüllkurve des ursprünglichen Informationssignals, so wird der Source-Decodierer beispielsweise eine Signalsynthese vornehmen, wobei die spektrale Feinstruktur synthetisiert wird und mit den übertragenen Daten der spektralen Grobstruktur gewichtet wird, derart, dass ein synthetisiertes Spektrum erzeugt wird, welches dann der Synthese-Filterbank zugeführt wird, um ein decodiertes Audiosignal zu erzeugen, das wenigstens noch eine Sprachverständlichkeit hat. Entsprechend kann vorgegangen werden, wenn Skalenfaktoren und/oder Codetabellenindizes übertragen werden. In diesem Fall werden sämtliche übertragenen Daten gemäß ihrem ursprünglichen Zweck eingesetzt, während die nicht-übertragenen Daten synthetisiert werden, beispielsweise durch die synthetische Erzeugung von Spektralwerten, die in einem Skalenfaktorband zusammen betrachtet so gewichtet werden, dass eine bestimmte Energieverteilung in dem Band erreicht wird, wobei die absolute Energie ohnehin durch den Skalenfaktor wesentlich bestimmt ist, der direkt im Nebenkanal-Datenstrom übertragen worden ist.

Alternativ kann der Nebenkanal-Datenstrom auch eine Bandbegrenzte Darstellung (z. B. bis 4 kHz) der Ursprungsdaten sein, so dass sich der Nebenkanal und der Hauptkanal lediglich in ihrer Bandbreite unterscheiden. In diesem Fall würde der Decodierer für den Nebenkanal-Daten keine weiteren Spektralwerte synthetisieren, sondern würde einfach das schmalbandige Signal erzeugen, wie es ist.

Ist der Nebenkanal-Datenstrom dagegen das Ausgangssignal eines Sprachcodierers, wie beispielsweise eines CELP-Codierers, wie er bei GSM eingesetzt wird, so umfasst der erfindungsgemäße Rundfunkempfänger auch einen GSM-Sprachdecodierer, um die Nebenkanaldaten zu erzeugen, wenn die Empfangsqualitätsschwelle unterschritten wird.

Der Qualitätsüberwacher 53 in Fig. 6 kann von verschiedenen Stellen in der Verarbeitungskette mit Informationen über die Empfangsqualität versorgt werden. Der Qualitätsüberwacher 53 wird jedoch vorzugsweise direkt von einem in einem Rundfunkempfänger ohnehin typischerweise vorhandenen Kanalschätzer 64 gespeist, welcher ausgebildet ist, um mit oder ohne Pilottöne den drahtlosen Übertragungskanal zu schätzen. Je nach Implementierung des Kanalschätzers liefert dieser z. B. bereits ein SNR, welches dann durch den Qualitätsüberwacher 53 nur noch mit der Schwelle zu vergleichen ist, um ein Steuersignal 65 zu erzeugen, das einen Umschalter 66 ansteuert, um entweder den Hauptkanal oder den Nebenkanal auszugeben.

Bei der in Fig. 6 gezeigten Darstellung wurde davon ausgegangen, dass der Source-Decodierer immer parallel sowohl Hauptkanal als auch Nebenkanal ausgibt und zwar bereits mit kompensierter Verzögerung. Dies hat den Vorteil, dass dann, wenn die Empfangsqualität unterschritten wird, einfach im Umschalter 66 umgeschaltet werden muss, dass das decodierte Nebenkanal-Signal also bereits vorliegt. Alternativ kann jedoch auch zum Stromsparen insbesondere in mobilen Geräten lediglich nur der Hauptkanal heraus separiert werden, um decodiert zu werden, wobei mit einer Decodierung des Nebenkanals nur dann begonnen wird, wenn die Empfangsqualität unter die Schwelle geht. Dies hat den Vorteil, dass am Ausgang des Soure-Decodierers immer nur ein Signal fertig anliegt und somit für das zweite Signal, also z. B. für den Hauptkanal im Extrem-Betrieb oder für den Nebenkanal im Normalbetrieb keine Prozessor-Ressourcen oder Batterie-Ressourcen benötigt werden. Insofern ist der Umschalter 66 auch schematisch zu sehen, da er in die Funktionalität des Decodierers bereits integriert sein kann und prinzipiell auch an jeder beliebigen Stelle existieren kann, wo der Hauptkanal und der Nebenkanal bereits separat vorliegen. Liegen nämlich z. B. Hauptkanal und Nebenkanal bereits am Ausgang des Demappers 61 vor, so kann der Umschalter 66 bereits dort angeordnet sein, um entweder den Hauptkanal oder den Nebenkanal in den nachgeschalteten Kanal-Decodierer einzuspeisen.

Im Hinblick auf die Qualitätsüberwachung 53 sei darauf hingewiesen, dass dann, wenn nicht auf den Kanalschätzer 64 zugegriffen wird oder wenn zusätzliche Daten über die Empfangsqualität gewünscht sind, an jeder Stelle auf den Hauptkanal oder auf das kombinierte Hauptkanal/Nebenkanal-Signal zugriffen werden kann, um einen Eindruck über die aktuelle Empfangsqualität und insbesondere über die Empfangsqualität des Hauptkanals zu erhalten.

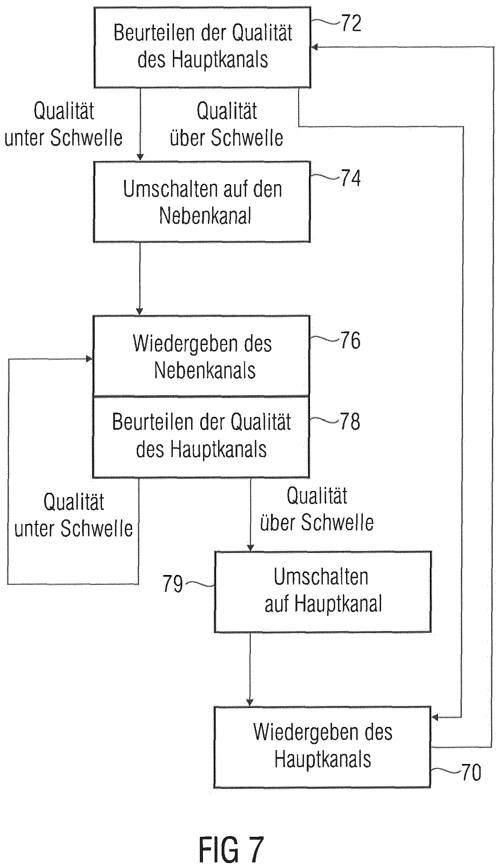

Nachfolgend wird bezugnehmend auf Fig. 7 eine prinzipielle Ablaufskizze gemäß einem bevorzugten Ausführungsbeispiel der vorliegenden Erfindung auf Empfängerseite dargestellt. Es wird davon ausgegangen, dass gerade eine Wiedergabe des Hauptkanals stattfindet, wie es im Schritt 70 angedeutet ist. Parallel zur Wiedergabe des Hauptkanals in Schritt 70 findet eine Beurteilung der Qualität des Hauptkanals im Schritt 72 statt. Alternativ oder zusätzlich kann selbstverständlich, wie es bezugnehmend auf Fig. 6 dargestellt worden ist, auch die Empfangsqualität allgemein, also ohne direkten Bezug auf den Hauptkanal beurteilt werden, beispielsweise wenn auf einen Kanalschätzer, der mit oder ohne Pilottöne arbeitet, zurückgegriffen wird.

Lediglich der Übersichtlichkeit halber wird in Fig. 7 von einer "Qualität des Hauptkanals" gesprochen, die beurteilt wird. Liegt die Qualität, die in Block 72 beurteilt wird, über der Schwelle, so wird mit der Wiedergabe des Hauptkanals im Schritt 70 fortgefahren. Wird jedoch festgestellt, dass die Qualität unter der Schwelle ist, so wird auf den Nebenkanal umgeschaltet, wie es in Schritt 74 gezeigt ist. Hierauf wird der Nebenkanal wiedergegeben, wie dies in Schritt 76 angedeutet ist. Parallel oder anschließend findet eine Beurteilung der Qualität des Hauptkanals oder allgemein der Empfangsqualität statt, wie es bei 78 dargestellt ist, wobei der Schritt 78 identisch zum Schritt 72 implementiert sein kann. Unterschiede bestehen lediglich darin, dass dort eine Qualität beurteilt wird, die nicht die Qualität des gerade wiedergegebenen Kanals ist. Wird im Feld 78 festgestellt, dass die Qualität unter der Schwelle ist, wird mit der Wiedergabe des Nebenkanals fortgefahren. Wird dagegen im Schritt 78 festgestellt, dass die Qualität über der Schwelle ist, wird auf den Hauptkanal umgeschaltet, wie es in Schritt 79 dargestellt ist.

Wenn das Signal ein Video-Signal ist, so kann der Nebenkanal eine downgesampelte Version des Hauptkanals sein. Die Dezimierung von Daten erfolgt durch räumliche Dezimierung z. B. jedes zweiten Pixels pro Bild vertikal und horizontal und/oder durch zeitliche Dezimierung z. B. jedes zweiten Bilds einer Sequenz oder durch sonstige Dezimierungsmaßnahmen.

Abhängig von den Gegebenheiten kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

## Patentansprüche

1. Vorrichtung zum Erzeugen eines zu sendenden Signals, mit folgenden Merkmalen:
einem Codierer (14) zum Erzeugen eines codierten Signals aus einem Informationssignal (16), wobei der Codierer (14) ausgebildet ist,
um Daten für einen Hauptkanal (18a) und Daten für einen Nebenkanal (18b) zu erzeugen, die separat voneinander decodierbar sind und das Informationssignal darstellen, und
um die Daten für den Hauptkanal (18a) und die Daten für den Nebenkanal (18b) so zu erzeugen, dass der Nebenkanal gegenüber Übertragungskanaleinflüssen robuster ist als der Hauptkanal (18a),
wobei der Codierer einen Quellencodierer (20) aufweist, der ausgebildet ist, um sowohl die Daten für den Hauptkanal (18a) als auch die Daten für den Nebenkanal (18b) zu erzeugen, wobei der Quellencodierer (20) ferner einen Selektor (47) aufweist, um einen Teil der durch den Quellencodierer erzeugten Daten zu selektieren, um unter Verwendung dieser Daten die Daten für den Nebenkanal (18b) zu bilden,
wobei der Nebenkanal Skalenfaktoren umfasst, die Energien pro unterschiedlichen Teilbändern eines Informationssignals darstellen,oder der Nebenkanal Codebuch-Indizes von Codebüchern aufweist, die zum Encodieren des Hauptkanals verwendet worden sind, wobei die Codebücher Werte aus unterschiedlichen Wertebereichen darstellen.

2. Vorrichtung nach Anspruch 1, bei der der Codierer (14) ausgebildet ist, um die Daten für den Nebenkanal (18b) so zu erzeugen, dass er eine qualitativ schlechtere Darstellung des Informationssignals ist als der Hauptkanal (18a).

3. Vorrichtung nach Anspruch 1 oder 2, bei der Codierer (14) ausgebildet ist, um eine verlustbehaftete Datenkompression mit dem Informationssignal (16) durchzuführen, wobei ein Kompressionsfaktor bei einer Erzeugung der Daten des Nebenkanals (18b) höher ist als bei einer Erzeugung der Daten des Hauptkanals (18a), oder bei dem für den Hauptkanal eine verlustlose Datenkompression durchführbar ist, während für den Nebenkanal eine verlustbehaftete Datenkompression durchführbar ist.

4. Vorrichtung nach einem der vorhergehenden Ansprüche, bei der der Codierer (14) ausgebildet ist, um die Daten für den Nebenkanal (18b) zu so erzeugen, dass er eine niedrigere Bitrate zur Übertragung benötigt als der Hauptkanal (18a).

5. Vorrichtung nach einem der vorhergehenden Ansprüche, bei der der Codierer (14) einen Quellencodierer (20) und einen nachgeschalteten Redundanzcodierer (22) aufweist, wobei der Redundanzcodierer (22) ausgebildet ist, um die Daten für den Hauptkanal (18a) mit einer ersten Coderate zu erzeugen und die Daten für den Nebenkanal mit einer zweiten Coderate zu erzeugen, die kleiner ist als die erste Coderate, wobei die Coderaten kleiner als 1 sind und durch das Verhältnis einer Anzahl von Eingabebits zu einer Anzahl von aus den Eingabebits abgeleiteten Ausgabebits definiert sind.

6. Vorrichtung nach einem der vorhergehenden Ansprüche, bei der der Codierer (14) einen Mapper (24) aufweist, der ausgebildet ist, um unter Verwendung eine ersten Mapping-Regel die Daten für den Hauptkanal (18a) zu erzeugen und unter Verwendung einer zweiten Mapping-Regel die Daten für den Nebenkanal (18b) zu erzeugen, wobei ein Signal/Rausch-Verhältnis zum Decodieren des Hauptkanals (18a) größer ist als ein Signal/RauschVerhältnis zum Decodieren des Nebenkanals (18b).

7. Vorrichtung nach Anspruch 6, bei der die zweite Mapping-Regel mehr unterschiedliche Mapping-Zustände definiert als die erste Mapping-Regel.

8. Vorrichtung nach Anspruch 6 oder 7, bei der ein Mapping-Zustand der zweiten Mapping-Regel mehr Bits repräsentiert als ein Mapping-Zustand der ersten Mapping-Regel.

9. Vorrichtung nach einem der vorhergehenden Ansprüche, der folgende Merkmalen aufweist:
einen Modulierer (26) zum Modulieren von Informationen des Hauptkanals und des Nebenkanals auf eine Mehrzahl von Signalträgern, wobei die Signalträger Frequenzträger, Zeitträger und/oder Codeträger in einem FDMA, TDMA und/oder CDMA-System sind.

10. Vorrichtung nach einem der vorhergehenden Ansprüche, bei der der Codierer (14) einen Quellencodierer (20) aufweist, der einen Sprachcodierer (32) zum Erzeugen der Daten für den Nebenkanal (18b) und einen Audiocodierer (30) zum Erzeugen der Daten für den Hauptkanal aufweist, wobei der Audiocodierer mehr Bits für eine gegebene zeitliche Länge des Informationssignals (16) als der Sprachcodierer benötigt.

11. Vorrichtung nach einem der Ansprüche 1 bis 9, bei der Codierer (14) ein Quellencodierer ist, der ausgebildet ist, um eine Zeitbereich/Spektralbereichs-Umwandlung (41) durchzuführen, und der zur Erzeugung der Nebenkanalkoeffizienten eine Beschreibung einer spektralen Einhüllenden liefert, die wenigstens so fein quantisiert ist und wenigstens so oft übertragen wird, dass auf Decodiererseite bei einem gegebenen Signal/Rauschverhältnis eine Sprachverständlichkeit über 50 % der insgesamt übertragenen Wörter erreichbar ist.

12. Vorrichtung nach Anspruch 11, bei der die Koeffizienten LPC-Koeffizienten sind oder aus LPC-Koeffizienten hergeleitet sind.

13. Vorrichtung nach Anspruch 1, bei der Codierer (14) einen Subband-basierten Audiocodierer aufweist, der ausgebildet ist, um pro Band einen Skalenfaktor zu erzeugen, wobei die Skalenfaktoren eine spektrale Grobstruktur einer spektralen Darstellung des codierten Signals darstellen, und bei der der Selektor (47) ausgebildet ist, um die pro Band vorliegenden Skalenfaktoren zu selektieren.

14. Vorrichtung nach Anspruch 1 oder 13, bei der der Codierer (14) einen Subband-basierten Audiocodierer aufweist, der ausgebildet ist, um quantisierte Spektralwerte unter Verwendung verschiedener Codebücher zu codieren, wobei die Codebücher unterschiedlich große Wertebereiche von quantisierten Spektralwerten darstellen, und wobei Codebuch-Indizes erzeugt werden, die die für die quantisierten Spektralwerte jeweils verwendeten Codebücher repräsentieren, und wobei der Selektor (47) ausgebildet ist, um die Codebuchindizes zu selektieren.

15. Vorrichtung nach einem der vorhergehenden Ansprüche, die ausgebildet ist, um einen DAB- oder DRM-Sender zu speisen, oder um ein Paket-orientiertes Datennetz zu speisen.

16. Vorrichtung nach einem der vorhergehenden Ansprüche, bei der der Codierer (14) ausgebildet ist, um einen weiteren Nebenkanal (18c) mit unterschiedlichem Zeitversatz und/oder unterschiedlicher Robustheit gegenüber Kanaleinflüssen zu erzeugen, welcher ebenfalls separat von dem Hauptkanal (18a) und von dem Nebenkanal (18b) decodierbar ist.

17. Vorrichtung zum Erzeugen eines decodierten Signals, mit folgenden Merkmalen:
einem Empfänger (50) zum Empfangen eines Empfangssignals, das einen Hauptkanal und einen Nebenkanal aufweist, die separat voneinander decodierbar sind, wobei ein minimales Signal/Rauschverhältnis zum Decodieren des Nebenkanals kleiner als ein minimales Signal/Rauschverhältnis zum Decodieren des Hauptkanals ist;
einem Decodierer (52) zum Erzeugen eines von dem Nebenkanal getrennten Hauptkanals;
einem Qualitätsüberwacher (53) zum Abschätzen einer Empfangsqualität; und
einem Umschalter (66), der durch den Qualitätsüberwacher (53) steuerbar ist, um als decodiertes Signal den Nebenkanal zu liefern, wenn die Empfangsqualität kleiner als eine Schwellenqualität ist, und um als decodiertes Signal den Hauptkanal zu liefern, wenn die Empfangsqualität größer oder gleich der Schwellenqualität ist,
wobei der Nebenkanal Skalenfaktoren umfasst, die Energien pro unterschiedlichen Teilbändern eines Informationssignals darstellen, und wobei der Decodierer (52) einen Quellendecodierer aufweist, der ausgebildet ist, um zum Erzeugen des Nebenkanals Spektralwerte in Subbändern, für die Skalenfaktoren im Nebenkanal übertragen worden sind, zu synthetisieren und die synthetisierten Spektralwerte unter Verwendung der übertragenen Skalenfaktoren zu gewichten, oder
wobei der Nebenkanal Codebuch-Indizes von Codebüchern aufweist, die zum Encodieren des Hauptkanals verwendet worden sind, wobei die Codebücher Werte aus unterschiedlichen Wertebereichen darstellen, und wobei der Decodierer (52) einen Source-Decodierer (63) aufweist, der ausgebildet ist, um unter Verwendung der Codebuch-Indizes Codewörter zu synthetisieren, wobei zu jedem Codebuch-Index nur ein Codewort synthetisiert wird, das zu dem Wertebereich gehört, den das durch den Codebuchindex indizierte Codebuch repräsentiert.

18. Vorrichtung nach Anspruch 17, die einen Kanalschätzer (64) zum Schätzen eines Übertragungskanals mit oder ohne Pilotsymbole aufweist, und
bei der Kanalschätzer (64) ausgebildet ist, um den Qualitätsüberwacher (53) mit Kanaldaten zu versorgen.

19. Vorrichtung nach Anspruch 17 oder Anspruch 18, der einen Demodulierer (60) aufweist, wobei der Qualitätsüberwacher (53) ausgebildet ist, um Daten vor oder nach dem Demodulierer zur Qualitätsüberwachung auszuwerten.

20. Vorrichtung nach einem der Ansprüche 17 bis 19, bei der ferner ein Demapper (61) ausgebildet ist, und bei der der Qualitätsüberwacher (53) ausgebildet ist, um ein Ausgangssignal des Demappers (61) zur Qualitätsüberwachung auszuwerten.

21. Vorrichtung nach einem der Ansprüche 17 bis 20, bei der der Decodierer ferner einen Kanaldecodierer (62) aufweist, und bei dem der Qualitätsüberwacher (53) ausgebildet ist, um Kanaldecodierer-Ausgangsdaten zur Qualitätsüberwachung zu verwenden.

22. Vorrichtung nach einem der Ansprüche 19 bis 21, bei der der Qualitätsüberwacher (53) ausgebildet ist, um die Qualitätsüberwachung unter Verwendung des Hauptkanals durchzuführen.

23. Vorrichtung nach einem der Ansprüche 17 bis 22, bei der der Decodierer einen Source-Decodierer (63) aufweist, der ausgebildet ist, um ungültige Codewörter, die quantisierte Werte darstellen, zu erkennen, und bei dem der Qualitätsüberwacher (53) ausgebildet ist, um auf der Basis einer Anzahl von erfassten ungültigen Codewörtern eine Qualitätsüberwachung durchzuführen.

24. Verfahren zum Erzeugen eines zu sendenden Signals, mit folgenden Schritten:
Erzeugen (14) eines codierten Signals aus einem Informationssignal (16), derart,
dass Daten für einen Hauptkanal (18a) und Daten für einen Nebenkanal (18b) erzeugt werden, die separat voneinander decodierbar sind und das Informationssignal darstellen, und
wobei die Daten für den Hauptkanal (18a) und die Daten für den Nebenkanal (18b) derart erzeugt werden, dass der Nebenkanal gegenüber Übertragungskanaleinflüssen robuster ist als der Hauptkanal (18a),
wobei der Schritt des Erzeugens das Verwenden eines Quellencodierers (20) aufweist, der ausgebildet ist, um sowohl die Daten für den Hauptkanal (18a) als auch die Daten für den Nebenkanal (18b) zu erzeugen, wobei der Quellencodierer (20) ferner einen Selektor (47) aufweist, um einen Teil der durch den Quellencodierer erzeugten Daten zu selektieren, um unter Verwendung dieser Daten die Daten für den Nebenkanal (18b) zu bilden.

25. Verfahren zum Erzeugen eines decodierten Signals, mit folgenden Schritten:
Empfangen (50) eines Empfangssignals, das einen Hauptkanal und einen Nebenkanal aufweist, die separat voneinander decodierbar sind, wobei ein minimales Signal/Rauschverhältnis zum Decodieren des Nebenkanals kleiner als ein minimales Signal/Rauschverhältnis zum Decodieren des Hauptkanals ist;
Erzeugen (52), durch einen Decodierer (52), eines von dem Nebenkanal getrennten Hauptkanals;
Abschätzen (53) einer Empfangsqualität; und
Liefern, als decodiertes Signal, den Nebenkanal, wenn die Empfangsqualität kleiner als eine Schwellenqualität ist, oder Liefern, als decodiertes Signal, den Hauptkanal, wenn die Empfangsqualität größer oder gleich der Schwellenqualität ist,
wobei der Nebenkanal Skalenfaktoren umfasst, die Energien pro unterschiedlichen Teilbändern eines Informationssignals darstellen, und wobei der Decodierer (52) einen Quellendecodierer aufweist, der ausgebildet ist, um zum Erzeugen des Nebenkanals Spektralwerte in Subbändern, für die Skalenfaktoren im Nebenkanal übertragen worden sind, zu synthetisieren und die synthetisierten Spektralwerte unter Verwendung der übertragenen Skalenfaktoren zu gewichten, oder
wobei der Nebenkanal Codebuch-Indizes von Codebüchern aufweist, die zum Encodieren des Hauptkanals verwendet worden sind, wobei die Codebücher Werte aus unterschiedlichen Wertebereichen darstellen, und wobei der Decodierer (52) einen Source-Decodierer (63) aufweist, der ausgebildet ist, um unter Verwendung der Codebuch-Indizes Codewörter zu synthetisieren, wobei zu jedem Codebuch-Index nur ein Codewort synthetisiert wird, das zu dem Wertebereich gehört, den das durch den Codebuchindex indizierte Codebuch repräsentiert.

26. Computer-Programm mit einem Programmcode zum Durchführen des Verfahrens nach Patentanspruch 24 oder 25, wenn das Computer-Programm auf einem Rechner abläuft.

## Claims

1. A device for generating a signal to be transmitted, comprising:
an encoder (14) for generating an encoded signal from an information signal (16), wherein the encoder (14) is implemented
to generate data for a main channel (18a) and data for a side channel (18b) which may be decoded separate from each other and represent the information signal, and
to generate the data for the main channel (18a) and the data for the side channel (18b) so that the side channel is more robust against transmission-channel influences than the main channel (18a),
wherein the encoder comprises a source encoder (20) which is implemented to generated both the data for the main channel (18a) and also the data for the side channel (18b), wherein the source encoder (20) further comprises a selector (47) to select a part of the data generated by the source encoder to form the data for the side channel (18b) using this data,
wherein the side channel includes scale factors representing energies per different subbands of an information signal, or wherein the side channel comprises code book indices of code books which were used for encoding the main channel, wherein the code books represent values of different value ranges.

2. The device according to claim 1, wherein the encoder (14) is implemented to generate the data for the side channel (18b) so that it is a qualitatively worse representation of the information signal than the main channel (18a).

3. The device according to claims 1 or 2, wherein the encoder (14) is implemented to execute a lossy data compression with the information signal (16), wherein a compression factor in a generation of the data of the side channel (18b) is higher than in a generation of the data of the main channel (18a), or wherein for the main channel a lossless data compression may be executed, while for the side channel a lossy data compression may be executed.

4. The device according to one of the preceding claims, wherein the encoder (14) is implemented to generate the data for the side channel (18b) such that it requires a lower bit rate for transmission than the main channel (18a).

5. The device according to one of the preceding claims, wherein the encoder (14) comprises a source encoder (20) and a downstream redundancy encoder (22), wherein the redundancy encoder (22) is implemented to generate the data for the main channel (18a) with a first code rate and to generate the data for the side channel with a second code rate which is smaller than the first code rate, wherein the code rates are smaller than 1 and are defined by the ratio of a number of input bits with regard to a number of output bits derived from the input bits.

6. The device according to one of the preceding claims, wherein the encoder (14) comprises a mapper (24) which is implemented to generate the data for the main channel (18a) using a first mapping rule and to generate the data for the side channel (18b) using a second mapping rule, wherein a signal/noise ratio for decoding the main channel (18a) is higher than a signal/noise ratio for decoding the side channel (18b).

7. The device according to claim 6, wherein the second mapping rule defines more different mapping states than the first mapping rule.

8. The device according to claims 6 or 7, wherein a mapping state of the second mapping rule represents more bits than a mapping state of the first mapping rule.

9. The device according to one of the preceding claims, comprising:
a modulator (26) for modulating information of the main channel and the side channel to a plurality of signal carriers, wherein the signal carriers are frequency carriers, time carriers and/or code carriers in an FDMA, TDMA and/or CDMA system.

10. The device according to one of the preceding claims, wherein the encoder (14) comprises a source encoder (20) comprising a speech encoder (32) for generating the data for the side channel (18b) and an audio encoder (30) for generating the data for the main channel, wherein the audio encoder requires more bits for a given time length of the information signal (16) than the speech encoder.

11. The device according to one of claims 1 to 9, wherein the encoder (14) is a source encoder which is implemented to execute a time-range/spectral-range conversion (41) and which provides a description of a spectral envelope for generating the sidechannel coefficients which is at least quantized so finely and is at least transmitted so often that, on the decoder side with a given signal/noise ratio, a speech intelligibility of more than 50% of the total transmitted words may be achieved.

12. The device according to claim 11, wherein the coefficients are LPC coefficients or derived from LPC coefficients.

13. The device according to claim 1, wherein the encoder (14) comprises a subband-based audio encoder configured to generate one scale factor per band, wherein the scale factors represent a spectral coarse structure of a spectral representation of the encoded signal, and wherein the selector (47) is implemented to select the existing scale factors per band.

14. The device according to claims 1 or 13, wherein the encoder (14) comprises a subband-based audio encoder which is implemented to encode quantized spectral values using different code books, wherein the code books represent value ranges of quantized spectral values of different sizes, and wherein code book indices are generated which each represent used code books for the quantized spectral values, and wherein the code book indices are generated representing the code books used for the quantized spectral values, and wherein the selector (47) is implemented to select the code book indices.

15. The device according to one of the preceding claims which is implemented to feed a DAB or DRM transmitter or to feed a package-oriented data network.

16. The device according to one of the preceding claims, wherein the encoder (14) is implemented to generate a further side channel (18c) with a different time offset and/or different robustness against channel influences which may also be decoded separately from the main channel (18a) and from the side channel (18b).

17. A device for generating a decoded signal, comprising:
a receiver (50) for receiving a receive signal comprising a main channel and a side channel which may be decoded separate from each other, wherein a minimal signal/noise ratio for decoding the side channel is smaller than a minimal signal/noise ratio for decoding the main channel;
a decoder (52) for generating a main channel which is separate from the side channel;
a quality observer (53) for assessing a receive quality; and
a changeover switch (66) which is controllable by the quality observer (53) to provide the side channel as a decoded signal when the receive quality is lower than a threshold quality and to provide the main channel as a decoded signal when the receive quality is higher than or equal to the threshold quality,
wherein the side channel includes scale factors representing energies per different subbands of an information signal, and wherein the decoder (52) comprises a source decoder which is implemented, for generating the side channel, to synthesize spectral values in subbands for which scale factors were transmitted in the side channel and to weight the synthesized spectral values using the transmitted scale factors, or
wherein the side channel comprises code book indices of code books which were used for encoding the main channel, wherein the code books represent values of different value ranges, and wherein the decoder (52) comprises a source decoder (63) which is implemented to synthesize code words using the code book indices, wherein for each code book index only one code word is synthesized belonging to the value range which the code book indicated by the code book index represents.

18. The device according to claim 17, comprising a channel estimator (64) for estimating a transmission channel with or without pilot symbols, and
wherein the channel estimator (64) is implemented to feed the quality observer (53) with channel data.

19. The device according to claim 17 or claim 18, comprising a demodulator (60), wherein the quality observer (53) is implemented to assess data before and after the demodulator for quality observation.

20. The device according to one of claims 17to 19, wherein a demapper (61) is further implemented and wherein the quality observer (53) is implemented to evaluate an output signal of the demapper (61) for quality observation.

21. The device according to one of claims 17 to 20, wherein the decoder further comprises a channel decoder (62) and wherein the quality observer (53) is implemented to use the channel decoder output data for quality observation.

22. The device according to one of claims 19 to 21, wherein the quality observer (53) is implemented to execute quality observation using the main channel.

23. The device according to one of claims 17 to 22, wherein the decoder comprises a source decoder (63) which is implemented to detect invalid code words representing quantized values, and wherein the quality observer (53) is implemented to execute a quality observation on the basis of a number of detected invalid code words.

24. A method for generating a signal to be transmitted, comprising:
generating (14) an encoded signal from an information signal (16), such that
data for a main channel (18a) and data for a side channel (18b) are generated which may be decoded separate from each other and represent the information signal, and
wherein the data for the main channel (18a) and the data for the side channel (18b) are generated such that the side channel is more robust against transmission-channel influences than the main channel (18a),
wherein generating comprises using a source encoder (20) which is implemented to generated both the data for the main channel (18a) and also the data for the side channel (18b), wherein the source encoder (20) further comprises a selector (47) to select a part of the data generated by the source encoder to form the data for the side channel (18b) using this data

25. A method for generating a decoded signal, comprising:
receiving (50) a receive signal comprising a main channel and a side channel which may be decoded separate from each other, wherein a minimal signal/noise ratio for decoding the side channel is smaller than a minimal signal/noise ratio for decoding the main channel;
generating (52), by a decoder (52), a main channel separate from the side channel;
assessing (53) a receive quality; and
providing, as a decoded signal, the side channel, when the receive quality is lower than a threshold quality, or providing, as a decoded signal, the main channel, when the receive quality is higher than or equal to the threshold quality,
wherein the side channel includes scale factors representing energies per different subbands of an information signal, and wherein the decoder (52) comprises a source decoder which is implemented, for generating the side channel, to synthesize spectral values in subbands for which scale factors were transmitted in the side channel and to weight the synthesized spectral values using the transmitted scale factors, or
wherein the side channel comprises code book indices of code books which were used for encoding the main channel, wherein the code books represent values of different value ranges, and wherein the decoder (52) comprises a source decoder (63) which is implemented to synthesize code words using the code book indices, wherein for each code book index only one code word is synthesized belonging to the value range which the code book indicated by the code book index represents.

26. A computer program having a program code for executing the method of claims 24 or 25, when the computer program runs on a computer.

## Revendications

1. Dispositif permettant de générer un signal à émettre, aux caractéristiques suivantes:
un codeur (14) destiné à générer un signal codé à partir d'un signal d'information (16), où le codeur (14) est conçu
pour générer des données pour un canal principal (18a) et des données pour un canal secondaire (18b) qui peuvent être décodées séparément les unes des autres et représentent le signal d'information, et
pour générer les données pour le canal principal (18a) et les données pour le canal secondaire (18b) de sorte que le canal secondaire soit plus robuste aux influences du canal de transmission que le canal principal (18a),
dans lequel le codeur présente un codeur de source (20) qui est conçu pour générer tant les données pour le canal principal (18a) que les données pour le canal secondaire (18b), dans lequel le codeur de source (20) présente par ailleurs un sélecteur (47) destiné à sélectionner une partie des données générées par le codeur de source pour former, à l'aide de ces données, les données pour le canal secondaire (18b),
dans lequel le canal secondaire comporte des facteurs d'échelle qui représentent les énergies par différentes bandes partielles d'un signal d'information, ou le canal secondaire présente des indices de livres de codes qui sont utilisés pour coder le canal principal, où les livres de codes représentent des valeurs de différentes plages de valeurs.

2. Dispositif selon la revendication 1, dans lequel le codeur (14) est conçu pour générer les données pour le canal secondaire (18b) de sorte qu'il soit une représentation qualitativement plus mauvaise du signal d'information que le canal principal (18a).

3. Dispositif selon la revendication 1 ou 2, dans lequel le codeur (14) est conçu pour effectuer une compression de données avec perte par le signal d'information (16), où un facteur de compression lors d'une génération des données du canal secondaire (18b) est supérieur à celui lors d'une génération des données du canal principal (18a), ou dans lequel peut être effectuée, pour le canal principal, une compression de données sans perte, tandis que pour le canal secondaire peut être effectuée une compression de données avec perte.

4. Dispositif selon l'une des revendications précédentes, dans lequel le codeur (14) est conçu pour générer les données pour le canal secondaire (18b) de sorte qu'il requière un débit de bits plus faible pour la transmission que le canal principal (18a).

5. Dispositif selon l'une des revendications précédentes, dans lequel le codeur (14) présente un codeur de source (20) et un codeur de redondance connecté en aval (22), dans lequel le codeur de redondance (22) est conçu pour générer les données pour le canal principal (18a) à un premier débit de codage et pour générer les données pour le canal secondaire à un deuxième débit de codage qui est inférieur au premier débit de codage, dans lequel les débits de codage sont inférieurs à 1 et sont définis par le rapport entre un nombre de bits d'entrée et un nombre de bits de sortie dérivés des bits d'entrée.

6. Dispositif selon l'une des revendications précédentes, dans lequel le codeur (14) présente un mappeur (24) qui est conçu pour générer, à l'aide d'une première règle de mappage, les données pour le canal principal (18a) et pour générer, à l'aide d'une deuxième règle de mappage, les données pour le canal secondaire (18b), dans lequel un rapport signal/bruit pour le décodage du canal principal (18a) est supérieur à un rapport signal/bruit pour le décodage du canal secondaire (18b).

7. Dispositif selon la revendication 6, dans lequel la deuxième règle de mappage définit plus d'états de mappage différents que la première règle de mappage.

8. Dispositif selon la revendication 6 ou 7, dans lequel un état de mappage de la deuxième règle de mappage représente plus de bits qu'un état de mappage de la première règle de mappage.

9. Dispositif selon l'une des revendications précédentes, présentant les caractéristiques suivantes:
un modulateur (26) destiné à moduler les informations de canal principal et de canal secondaire sur une pluralité de porteuses de signal, où les porteuses de signal sont des porteuses de fréquence, des porteuses de temps et/ou des porteuses de code dans un système FDMA, TDMA et/ou CDMA.

10. Dispositif selon l'une des revendications précédentes, dans lequel le codeur (14) présente un codeur de source (20) qui présente un codeur de la parole (32) destiné à générer les données pour le canal secondaire (18b) et un codeur audio (30) destiné à générer les données pour le canal principal, dans lequel le codeur audio requiert plus de bits pour une longueur de temps donnée du signal d'information (16) que le codeur de la parole.

11. Dispositif selon l'une des revendications 1 à 9, dans lequel le codeur (14) est un codeur de source qui est conçu pour effectuer une conversion du domaine temporel au domaine spectral (41), et qui fournit, pour la génération des coefficients de canal secondaire, une description d'une enveloppe spectrale qui est quantifiée au moins aussi finement et est transmise au moins aussi souvent que du côté du décodeur puisse être atteinte, à un rapport signal/bruit donné, une intelligibilité de la parole de plus de 50% des mots transmis en tout.

12. Dispositif selon la revendication 11, dans lequel les coefficients sont des coefficients de LPC ou qui sont dérivés de coefficients de LPC.

13. Dispositif selon la revendication 1, dans lequel le codeur (14) présente un codeur audio à base de sous-bandes qui est conçu pour générer, par bande, un facteur d'échelle, dans lequel les facteurs d'échelle représentent une structure spectrale grossière d'une représentation spectrale du signal codé, et dans lequel le sélecteur (47) est conçu pour sélectionner les facteurs d'échelle présents par bande.

14. Dispositif selon la revendication 1 ou 13, dans lequel le codeur (14) présente un codeur audio à base de sous-bandes qui est conçu pour coder des valeurs spectrales quantifiées à l'aide de différents livres de codes, dans lequel les livres de code représentent différentes plages de valeurs spectrales quantifiées, et dans lequel sont générés des indices de livre de code qui représentent respectivement les livres de code utilisés pour les valeurs spectrales quantifiées, et dans lequel le sélecteur (47) est conçu pour sélectionner les indices de livre de codes.

15. Dispositif selon l'une des revendications précédentes, qui est conçu pour alimenter un émetteur DAB ou DRM, ou pour alimenter un réseau de données orienté sur des paquets.

16. Dispositif selon l'une des revendications précédentes, dans lequel le codeur (14) est conçu pour générer avec un décalage dans le temps différent et/ou une robustesse différente aux influences de canal un autre canal secondaire (18c) qui peut également être décodé de manière séparée du canal principal (18a) et du canal secondaire (18b).

17. Dispositif permettant de générer un signal décodé, aux caractéristiques suivantes:
un récepteur (50) destiné à recevoir un signal de réception qui présente un canal principal et un canal secondaire qui peuvent être décodés de manière séparée l'un de l'autre, où un rapport signal/bruit minimum pour décoder le canal secondaire est inférieur à un rapport signal/bruit minimum pour décoder le canal principal;
un décodeur (52) destiné à générer un canal principal séparé du canal secondaire;
un contrôleur de qualité (53) destiné à estimer une qualité de réception; et
un commutateur (66) qui peut être commandé par le contrôleur de qualité (53) pour fournir, comme signal décodé, le canal secondaire lorsque la qualité de réception est inférieure à une qualité de seuil, et pour fournir, comme signal décodé, le canal principal lorsque la qualité de réception est supérieure ou égale à la qualité de seuil,
dans lequel le canal secondaire comporte des facteurs d'échelle qui représentent les énergies par différentes bandes partielles d'un signal d'information, et dans lequel le décodeur (52) comporte un décodeur de source qui est conçu pour synthétiser, pour générer le canal secondaire, les valeurs spectrales dans les sous-bandes pour lesquelles des facteurs d'échelle ont été transmis dans le canal secondaire, et pour pondérer les valeurs spectrales synthétisées à l'aide des facteurs d'échelle transmis, ou
dans lequel le canal secondaire présente des indices de livres de codes qui ont été utilisés pour coder le canal principal, dans lequel les livres de codes représentant des valeurs de plages de valeurs différentes, et dans lequel le décodeur (52) présente un décodeur de source (63) qui est conçu pour synthétiser les mots de code à l'aide des indices de livre de codes, dans lequel pour chaque indice de livre de codes n'est synthétisé qu'un seul mot de code qui appartient à la plage de valeurs que représente le livre de codes indexé par l'indice de livre de codes.

18. Dispositif selon la revendication 17, présentant un estimateur de canal (64) destiné à estimer un canal de transmission avec ou sans des symboles pilotes, et
dans lequel l'estimateur de canal (64) est conçu pour alimenter le contrôleur de qualité (53) en données de canal.

19. Dispositif selon la revendication 17 ou la revendication 18, présentant un démodulateur (60), dans lequel le contrôleur de qualité (53) est conçu pour évaluer les données avant ou après le démodulateur pour le contrôle de qualité.

20. Dispositif selon l'une des revendications 17 à 19, dans lequel est réalisé par ailleurs un moyen de démappage (61), et dans lequel le contrôleur de qualité (53) est conçu pour évaluer un signal de sortie du moyen de démappage (61) pour le contrôle de qualité.

21. Dispositif selon l'une des revendications 17 à 20, dans lequel le décodeur présente par ailleurs un décodeur de canal (62), et dans lequel le contrôleur de qualité (53) est conçu pour utiliser les données de sortie de décodeur de canal pour le contrôle de qualité.

22. Dispositif selon l'une des revendications 19 à 21, dans lequel le contrôleur de qualité (53) est conçu pour effectuer le contrôle de qualité à l'aide du canal principal.

23. Dispositif selon l'une des revendications 17 à 22, dans lequel le décodeur présente un décodeur de source (63) qui est conçu pour identifier des mots de code non valides qui représentent des valeurs quantifiées, et dans lequel le contrôleur de qualité (53) est conçu pour effectuer, sur base d'un nombre de mots de code non valides détectés, un contrôle de qualité.

24. Procédé permettant de générer un signal à émettre, aux étapes suivantes consistant à:
générer (14) un signal codé à partir d'un signal d'information (16), de sorte
que soient générées des données pour un canal principal (18a) et des données pour un canal secondaire (18b) qui peuvent être décodées séparément les unes des autres et qui représentent le signal d'information, et
dans lequel les données pour le canal principal (18a) et les données pour le canal secondaire (18b) sont générées de sorte que le canal auxiliaire soit plus robuste aux influences de canal de transmission que le canal principal (18a),
dans lequel l'étape de génération présente le fait d"utiliser un codeur de source (20) qui est conçu pour générer tant les données pour le canal principal (18a) que les données pour le canal secondaire (18b), dans lequel le codeur de source (20) présente par ailleurs un sélecteur (47) destiné à sélectionner une partie des données générées par le codeur de source pour former, à l'aide de ces données, les données pour le canal secondaire (18b).

25. Procédé permettant de générer un signal décodé, aux étapes suivantes consistant à:
recevoir (50) un signal de réception qui comprend un canal principal et un canal secondaire qui peuvent être décodés séparément l'un de l'autre, où un rapport signal/bruit minimum pour le décodage du canal secondaire est inférieur à un rapport signal/bruit minimum pour le décodage du canal principal;
générer (52), par un décodeur (52), un canal principal séparé du canal secondaire;
estimer (53) une qualité de réception; et
fournir, comme signal décodé, le canal secondaire lorsque la qualité de réception est inférieure à une qualité de seuil, ou fournir, comme signal décodé, le canal principal lorsque la qualité de réception est supérieure ou égale à la qualité de seuil,
dans lequel le canal secondaire comporte des facteurs d'échelle qui représentent les énergies par différentes bandes partielles d'un signal d'information, et dans lequel le décodeur (52) présente un décodeur de source qui est conçu pour synthétiser, pour générer le canal secondaire, les valeurs spectrales dans les bandes partielles pour lesquelles des facteurs d'échelle sont transmis dans le canal secondaire, et pour pondérer les valeurs spectrales synthétisées à l'aide des facteurs d'échelle transmis, ou
dans lequel le canal secondaire présente des indices de livre de codes qui ont été utilisés pour coder le canal principal, dans lequel les livres de codes représentent des valeurs de différentes plages de valeurs, et dans lequel le décodeur (52) présente un décodeur de source (63) qui est conçu pour synthétiser, à l'aide des indices de livre de codes, des mots de code, dans lequel pour chaque indice de livre de codes est synthétisé un mot seul de code appartenant à la plage de valeurs que représente le livre de codes indexé par l'indice de livre de codes.

26. Programme d'ordinateur avec un code de programme pour réaliser le procédé selon la revendication 24 ou 25 lorsque le programme d'ordinateur est exécuté sur un ordinateur.
